# EUROPEAN PATENT SPECIFICATION

(11) **EP 0 575 746 B1**
(45) Date of publication and mention of the grant of the patent: **21.06.2000**
(21) Application number: 93108067.5
(22) Date of filing: 18.05.1993
(51) Int. Cl.: H04B 7/08, H04L 1/06

(54) **Method and device for optimizing the radio link for a digital radio transmission system in difference of space and/or angle by varying the relative attenuation level between the two channels**
Verfahren und Vorrichtung zur Minimierung der ZF-geschätzten Bitfehlerratefunktion in einem digitalen Raum/Winkeldiversity-Funkempfänger
Méthode et dispositif pour la minimalisation de taux d'erreurs de bits estimé en fréquence intermédiaire dans un récepteur radio-numérique en diversité d'espace/angle

(30) Priority: 25.05.1992 IT MI921270
(43) Date of publication of application: 29.12.1993
(73) Proprietor: ALCATEL, 75008 Paris (FR)
(72) Inventor: Conti, Adelio, I-22050 Montevicchia (CO) (IT); Nobili, Rocco, I-20060 Cassina de 'Pecchi (MI) (IT); Troyer, Paolo, I-20099 Sesto S. Giovanni (MI) (IT)
(74) Representative: Schmidt, Werner Karl, Dipl.-Phys.

(56) References cited:
- EP-A- 0 333 167
- EP-A- 0 477 158
- PATENT ABSTRACTS OF JAPAN vol. 6, no. 226 (E-141)11 November 1982 & JP-A-57 129 044 (FUJITSU) 10 August 1982
- PATENT ABSTRACTS OF JAPAN vol. 6, no. 247 (E-146)7 December 1982 & JP-A-57 147 350 ( FUJITSU ) 11 September 1982
- AT & T TECHNICAL JOURNAL vol. 64, no. 4, April 1985, NEW YORK US pages 885 - 905 Y.S.YEH & L.J.GREENSTEIN 'A NEW APPROACH TO SPACE DIVERSITY COMBINING IN MICROWAVE DIGITAL RADIO'
- PROCEEDINGS OF 22ND EUROPEAN MICROWAVE CONFERENCE 24-27 August 1992, TUNBRIDGE WELLS (UK) volume 2, pages 1143-1148; U.CASIRAGHI ET AL.: "MiBS IF COMBINER FOR SPACE AND ANGLE DIVERSITY IN DIGITAL RADIO: FIRST TRIAL RESULTS"

## Description

The present invention relates to a method for optimizing the radio link in a digital radio transmission system employing space and/or angle diversity by varying the relative attenuation level between the two diversity channels according to claim 1.

In Italian Patent IT 1,259,031 of the same Applicant as the present application (corresponding to Italian Patent Application No. MI92A0001271 and EP 0572858) there is disclosed a method of processing and optimizing the analog BER (Bit Error Rate) function in a spatial and/or angular diversity digital radio transmission system.

In such a Patent, characterized in that the phase shifter which is present on the MAIN channel, carries out phase shifts to optimize the analog BER function, unbalances of attenuators are contemplated but such unbalances are only for determining the absolute minimum; however the shifting of the attenuators is not necessary, even if it is preferred.

The present invention relates to a method for further improving the system of said patent in which the shifting of the attenuators is now made always and in a critical manner in order to determine an optimum attenuation.

In addition to the above cited method, some other methods aiming at improving the received signal in space or angle difference transmission are known in the art. In Japanese Patent Application N. 57-129044 (D1) a phase variation and an attenuation are provided on one of the two receiving paths with respect to the other receiving path remaining unvaried. In D1 a pseudo error is optimized and thus a "out of order" situation can be experienced. In Japanese Patent Application N. 57-147350 two independent phase shifters are provided in the two receiving paths for analysing the two input signals. Such a second arrangement is expensive and the optimization is rather slow.

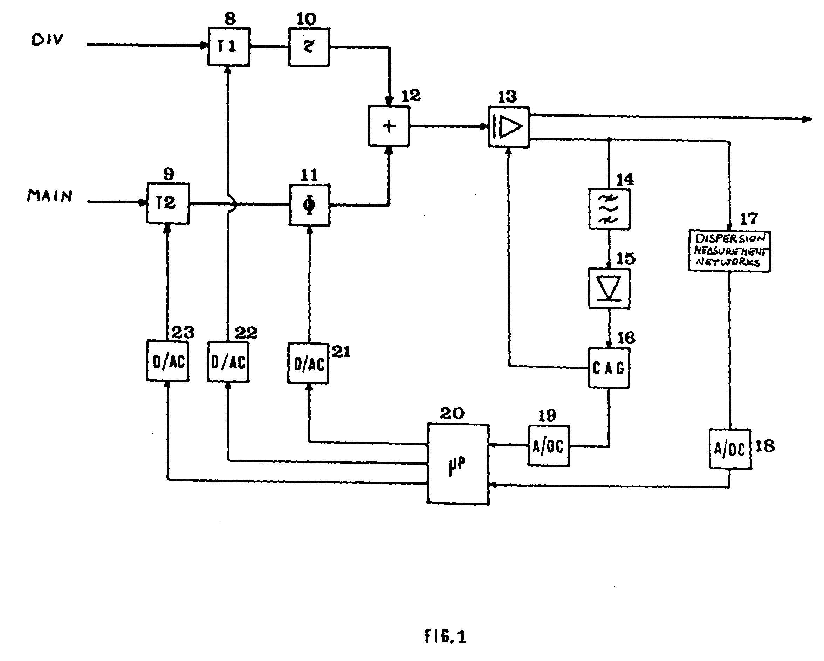

It has been discovered that further favorable results with respect to the above Italian patent are obtained by optimizing the analog BER function not only by varying the phase between the MAIN channel and the DIV channel, but also by varying the attenuation value introduced on the two channels of attenuators T1 and T2 (fig.1, corresponding to Fig. 6 of the above cited Italian Patent 1.259.031).

In the drawings:
Fig. 1 is a generalized schematic of a prior art combining system and corresponds to Fig. 6 of Italian Patent IT 1,259,031;
Fig. 2 shows a recombined data spectrum presenting a linear dispersion;
Fig. 3 shows a modification to Fig. 1 wherein a single control voltage controls both attenuators;
Fig. 4 is a block diagram for a generalized method for varying both the phase and the attenuation in order to optimize the analog BER; and
Fig. 5 is a block diagram of a preferred implementation of the generalized method of Fig. 4.

In fig.1 it has been indicated respectively:
MAIN : channel that phase shifts and attenuates the signal upstream of the summing node;
DIV : channel that attenuates upstream of the summing node
8 : driven attenuator T1
9 : driven attenuator T2
10 : delay line
11 : driven phase shift
12 : summing node
13 : IF amplifier
14 : power detection filter
15 : detector
16 : automatic gain control
17 : dispersion measurement networks
18 and 19 : analog-to-digital (A/D) converters
20 : microprocessor
21, 22, 23 : digital-to-analog (D/A) converter.

Varying the attenuation value of T1 and T2 is advantageous for many reasons; in particular, the two signals, even in absence of any selective fading can reach the combiner with different power levels.

This can occur because of different propagation features characteristic of the two channels, or because of a temporary mispointing of the antennas (in a spacial diversity system).

In such circumstances if the level difference between the two channels is not equalized by means of attenuators T1 and T2, the tolerance of the combiner to selective fading will degrade as a function of the level difference.

Moreover, it may happen that also when levels of the two signals due to flat fading are equal, there are selective fading conditions of the two channels for which, besides optimizing the analog BER function by varying the phase, it is advantageous to vary the attenuation value of T1 and T2 to the end of combination.

In the above-mentioned patent to which reference is made (and whose description is considered as herein incorporated) the following symbol has been used to represent the analog BER function: BER n (Ø, T1, T2).

Subscript n refers to the countless fading conditions which can occur on the two channels and consequently it characterizes the countless BER functions that can be defined correspondingly; Ø, T1 and T2 are the three variables to be act upon for optimizing the radio link.

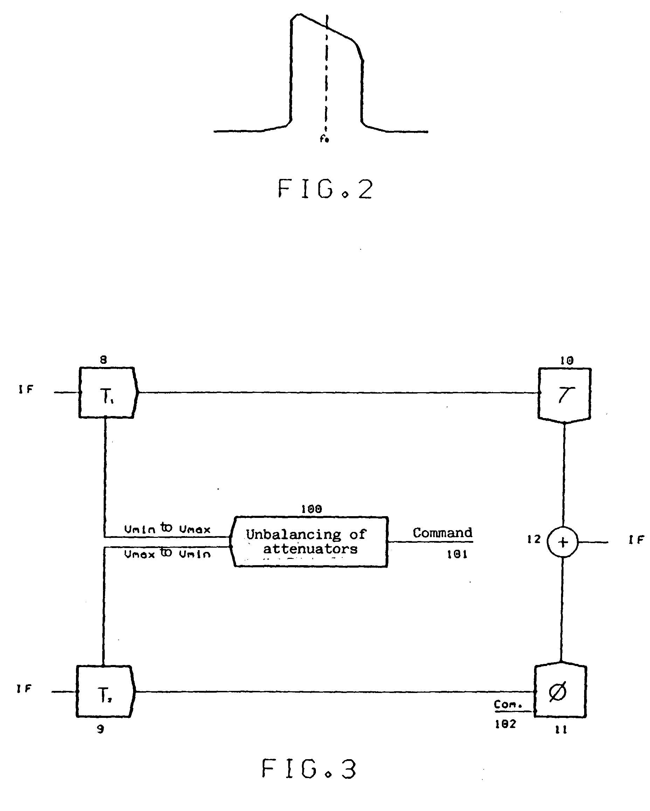

The variables are therefore three, but if the two attenuation commands are combined so that if one of the two attenuators increases the attenuation with respect to a nominal value, the other decreases it and vice versa there is defined a variable which measures the unbalance between the two attenuators (fig. 3).

The two variables, corresponding to an attenuation unbalance command (101) and phase shifter command (102) are therefore the variables to be acted upon to optimize the analog BER function for
which the following symbol is adopted: BERn (Ø,T) where T is the attenuators unbalance command.

The first point to be defined concerns the methodology with which the two variables are to be moved, e.g. to carry out an improvement step through the phase shifter and then an improvement step with attenuators, or optimize first through the phase shifter and then continue the optimization through the attenuators unbalance command and so on.

It has been surprisingly found it is better first to optimize the BERn (Ø, T) function by varying the phase and, thereafter, to unbalance the attenuators with the phase held at the previously obtained optimum value.

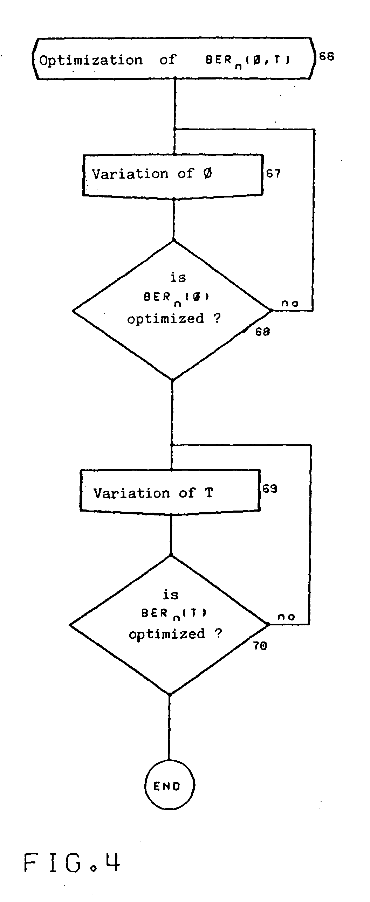

Such method is represented by the block diagram in fig.4.

In this figure the following blocks are represented:
66 : describes the functions carried out by blocks of fig. 4;
67 : handles the variation of the phase Ø
68 : evaluates the effects of the phase variation, both ways, for the purpose of BERn (Ø) optimization;
69 : handles the variations of the attenuators unbalance command T
70 : evaluates the effects of the variation of the attenuators unbalance command T for the purpose of the optimization of BERn (Ø).

At this point it is evident that the phase
optimization of BERn (Ø, T) is predominant with respect to the subsequent optimization carried out by moving the attenuators.

By moving the attenuators it is possible to improve, for radio linkage purposes, some situations for which the phase optimized BERn (Ø) has been already found; in fact, by executing shifts of the attenuators one can reduce the dispersion of the recombined data-spectrum without the risk of drastically lowering the power, an eventuality always present when, on the contrary, one tries to minimize dispersion through phase shifting.

One typical circumstance in which it is advantageous to vary the attenuator command is the one of fig. 2 where a recombined data spectrum which presents a linear dispersion is shown.

Optimizing the phase analog BER one cannot obtain a better data spectrum, e.g. if the flat attenuation level of the two signals is different; in this case it is sufficient to equalize such a level difference by varying the value of T to obtain a data spectrum with practically zero dispersion without the occurrence of significant power variations in the recombined spectrum.

Moreover there are some circumstances in which the flat attenuation level of the two signals is equal, and yet the recombined signal data spectrum is still similar to the one of fig. 2 after having reached the optimum phase for BERn (Ø).

Also in these circumstances varying the attenuation level (T1, T2) while trying to minimize dispersion results in the same results of the preceding case.

It results thus evident that it is practically equivalent to optimize the dispersion Ban n (T) or the analog BER when the attenuators unbalance command is varied; but it is necessary to point out that, in optimizing dispersion, the risk of completely turning off one of the channels in some conditions is reduced.

Turning off one of the channels is not recommended because when there is no longer condition for such turning off, resetting to the nominal attenuation condition would require a higher complexity of the system and hence higher costs.

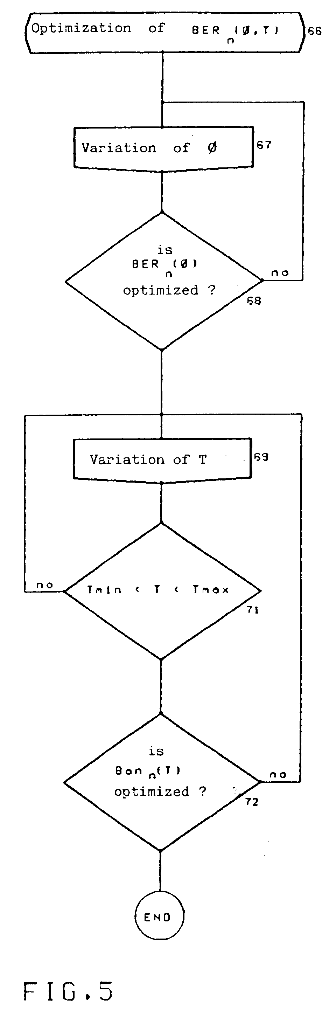

Therefore it is advantageous to optimize the dispersion Ban n (T) when moving the attenuators unbalance command, and moreover it is of advantage to restrict unbalance within certain values which will be designated by Tmin and Tmax (block diagram of fig. 5).

The following blocks are shown in fig. 5:
66: describes the overall function carried out by blocks of fig. 5;
67: handles variations of phase Ø
68: evaluates the effects of variation, both ways, of the phase for the purpose of BER n (Ø) optimization;
69: handles the variations of the attenuators unbalance command T;
71: limits the range of the attenuators unbalance command T between a maximum value Tmax and a minimum one T min;
72: evaluates the effects of variation of attenuators unbalance command T for the
   purpose of Ban n (T) optimization.

It should be noted that in Italian Patent Application MI92A001269 (abandoned) and Italian Patent IT 1,259,031 (corresponding to Italian Patent Application No. MI92A001271 and EP 0572858 ) improved implementations and applications of the subject method are disclosed. The descriptions attached to the above mentioned patent applications are considered as herein incorporated.

In the interest of clarity, the invention has been described with reference to specific and preferred embodiments; obviously the invention is susceptible to those modifications, variations, replacements and the like which being apparent to those skilled in the art, naturally are all falling within the scope of the appended claims.

## Claims

1. Method for optimizing the radio link for a space and/or angular diversity digital radio transmission system, comprising the steps of:
a) varying the phase (Ø) up to reach an optimal phase value;
b) holding fixed the optimal phase value so found;
c) unbalancing the attenuation (T) value in order to obtain an optimized recombined data spectrum;
characterized in that
d) the attenuation (T) is unbalanced until the optimum value of an IF analog Bit Error Rate (BER n (Ø, T)) is found, the attenuation (T) being a variable which measures the unbalance between the two attenuators.

2. Method for optimizing the radio link for a space and/or angular diversity digital radio transmission system, comprising the steps of:
a) varying the phase (Ø) up to reach an optimal phase value;
b) holding fixed the optimal phase value so found;
c) unbalancing the attenuation (T) value in order to obtain an optimized recombined data spectrum;
characterized in that
d) the attenuation (T) is unbalanced until the optimum value of a function (Ban(T)) representing the dispersion of the recombined data spectrum is reached, the attenuation (T), which is a variable which measures the unbalance between the two attenuators, being unbalanced between two values (Tmax and Tmin).

3. Method according to claim 1 or 2,
characterized in that
the attenuation (T) is unbalanced applying a unique command (101) on a circuit (100) which outputs two voltages varying between two corresponding different values Vmin and Vmax so that when one of the two voltages is applied on one attenuator, the other voltage is applied on the other attenuator, and vice versa.

## Patentansprüche

1. Verfahren zur Optimierung der Funkverbindung eines digitalen Raum- und/oder Winkeldiversity-Funkübertragungssystems, das die Schritte umfasst:
a) Variieren der Phase (Ø), bis ein optimaler Phasenwert erreicht wird;
b) Festhalten des so gefundenen optimalen Phasenwertes;
c) Unsymmetrischmachen des Wertes der Dämpfung (T), um ein optimiertes rekombiniertes Datenspektrum zu erhalten;
dadurch gekennzeichnet, dass
d) die Dämpfung (T) unsymmetrisch gemacht wird, bis der optimale Wert einer analogen IF-Bitfehlerrate (BER n (Ø, T)) gefunden wird, wobei die Dämpfung (T) eine Variable ist, die die Unsymmetrie zwischen den beiden Dämpfungsgliedern misst.

2. Verfahren zur Optimierung der Funkverbindung eines digitalen Raum- und/oder Winkeldiversity-Funkübertragungssystems, das die Schritte umfasst:
a) Variieren der Phase (Ø), bis ein optimaler Phasenwert erreicht wird;
b) Festhalten des so gefundenen optimalen Phasenwertes;
c) Unsymmetrischmachen des Wertes der Dämpfung (T), um ein optimiertes rekombiniertes Datenspektrum zu erhalten;
dadurch gekennzeichnet, dass
d) die Dämpfung (T) unsymmetrisch gemacht wird, bis der optimale Wert einer Funktion (Ban(T)), die die Streuung des rekombinierten Datenspektrums darstellt, erreicht wird, wobei die Dämpfung (T), die eine Variable ist, die die Unsymmetrie zwischen den beiden Dämpfungsgliedern misst, zwischen zwei Werten (Tmax und Tmin) unsymmetrisch gemacht wird.

3. Verfahren nach Anspruch 1 oder 2,
dadurch gekennzeichnet, dass
die Dämpfung (T) unsymmetrisch gemacht wird, indem ein einziger Befehl (101) an eine Schaltung (100) gegeben wird, die zwei Spannungen ausgibt, die zwischen zwei entsprechenden verschiedenen Werten Vmin und Vmax variieren, so dass, wenn eine der beiden Spannungen an ein Dämpfungsglied angelegt wird, die andere Spannung an das andere Dämpfungsglied angelegt wird, und umgekehrt.

## Revendications

1. Procédé pour optimiser la liaison radio d'un système de transmission radio numérique en diversité d'espace et/ou d'angle, comprenant les étapes consistant à :
a) faire varier la phase (Ø) jusqu'à atteindre une valeur de phase optimale;
b) maintenir fixe la valeur de phase optimale ainsi trouvée;
c) déséquilibrer la valeur d'atténuation (T) de façon à obtenir un spectre de données recombiné optimisé;
caractérisé en ce que
d) l'atténuation (T) est déséquilibrée jusqu'à ce que la valeur optimale d'un taux d'erreurs binaires (BER n (Ø, T)) analogique FI est trouvé, l'atténuation (T) étant une variable qui mesure le déséquilibre entre les deux atténuateurs.

2. Procédé pour optimiser la liaison radio pour un système de transmission radio numérique en diversité d'espace et/ou d'angle, comprenant les étapes consistant à :
a) faire varier la phase (Ø) jusqu'à atteindre une valeur de phase optimale;
b) maintenir fixe la valeur de phase optimale ainsi trouvée;
c) déséquilibrer la valeur d'atténuation (T) de façon à obtenir un spectre de données recombiné optimisé;
caractérisé en ce que
d) l'atténuation (T) est déséquilibrée jusqu'à ce que la valeur optimale d'une fonction (Ban(T)) représentant la dispersion du spectre de données recombiné soit atteinte, l'atténuation (T) qui est une variable mesurant le déséquilibre entre les deux atténuateurs étant déséquilibrée entre deux valeurs (Tmax et Tmin).

3. Procédé selon la revendication 1 ou 2,
caractérisé en ce que
l'atténuation (T) est déséquilibrée en appliquant une commande unique (101) sur un circuit (100) qui délivre deux tensions variant entre deux valeurs différentes correspondantes Vmin et Vmax de sorte que lorsque l'une des deux tensions est appliquée à un atténuateur, l'autre tension est appliquée à l'autre atténuateur, et vice versa.
